# EUROPEAN PATENT APPLICATION

(11) **EP 1 028 439 A1**
(43) Date of publication of application: **16.08.2000**
(21) Application number: 00200489.3
(22) Date of filing: 14.02.2000
(51) Int. Cl.: H01G 2/08

(54) **A power capacitor**

(30) Priority: 12.02.1999 EP 99200393
(71) Applicant: Asea Brown Boveri Jumet S.A., 6040 Charleroi (BE)
(72) Inventor: Lovkvist, Thomas, 6040 Charleroi (BE); Spronch, Luc, 6040 Charleroi (BE)
(74) Representative: Quintelier, Claude

(57) **Abstract**

A power capacitor having at least one winding, said capacitor comprises at least one heat pipe forming a thermal bridge between said winding(s) and the environment.

## Description

The present invention relates to a power capacitor having at least one winding. Such a power capacitor is generally known.

Power capacitors are usually manufactured by arranging insulating sheets (usually a plastic film such as polypropylene film) wound in layers together with metallic electrodes (which may be sheets of e.g. aluminium or vapour deposited metal electrodes of e.g. Al and/or Zn). This arrangement usually results in a cylindrical capacitor element, a flattened oval capacitor element or a stacked box-shaped capacitor element and comprising a series of windings. These capacitor elements may be used dry or liquid impregnated or again semi-impregnated in some form of enclosure either insulating (e.g. polymeric plastic or porcelain) or conducting (usually metallic such as steel or aluminium).

A drawback of the known power capacitors is that they are frequently limited in their performance due to the heat they generate and their ability to efficiently dissipate this heat. The internally generated heat is due to resistive losses in current conducting parts of the equipment or other losses such as losses in the dielectric system. Poor heat dissipation will often lead to reliability problems and could even create hot-spots which could damage the power capacitor.

It is therefor an object of the invention to realise a power capacitor with an improved ability to dissipate the internally generated heat.

A power capacitor according to the present invention is therefor characterised in that said capacitor comprises at least one heat pipe forming a thermal bridge between said winding(s) and the environment. Heat pipes have effective thermal conductivity characteristics which are orders of magnitude higher than common heat conductors such as aluminium or copper. Therefor heat pipes are particularly suitable for the extraction of heat from hot-spots of the interior of a power capacitor. Heat pipes have a negligible thermal resistance, which signifies that the heat evacuated by the heat pipe is quickly transferred to ambient and thus offer a good tool for controlling the heat inside the capacitor.

A first preferred embodiment of a power capacitor according to the invention is characterised in that said heat pipe is an integral part of an electrical conductor connected to said winding. In such a manner, the electric and thermal conduction are incorporated in a same component.

A second preferred embodiment of a power capacitor according to the invention is characterised in that said enclosure is provided with cooling means. The enclosure thus forms cooling means for dissipating into ambient the heat extracted from the capacitor.

The invention will now be described in more details with respect to the drawings showing preferred embodiments of power capacitors according to the invention.

In the drawings:
figure 1 illustrates different shapes of capacitors;
figure 2 (A to F) illustrates different embodiments of applying a heat pipe to a capacitor;
figure 3 (A to F) illustrates further embodiments of applying a heat pipe to the environment;
figure 4 (A to F) and 5 illustrate means for transferring the heat from the heat pipe to the environment.

In the figures a same reference has been assigned to a same or analogous element.

This invention concerns the use of heat pipes to improve the heat dissipation in a power capacitor. Heat pipes are commercially available components that have effective thermal conductivity characteristics orders of magnitude higher than common good conductors such as aluminium or copper. This very high effective heat conductivity is achieved by letting a suitable liquid, often water with a suitable additive such as methanol, change phase to vapour at a hotter part of the heat pipe and then move and condense at a cooler part of the heat pipe. The size, shape and internal pressure of the heat pipe are some parameters that determine the key characteristics of it. Modern heat pipes are often cylindrical, but may have other forms, e.g. flat. Heat pipes do typically have some mechanical flexibility and allow to be bent to some degree.

The invention uses heat pipes to evacuate heat from internal parts of power capacitors, from the surface of power capacitors and from assemblies of power capacitors assembled into modules (or blocks) with switching components and reactors as is done for applications in power factor compensation and filtering of power frequency networks. One or more heat pipes are connected to the power capacitor in such a manner as to form a thermal bridge with the windings of the capacitor and the environment.

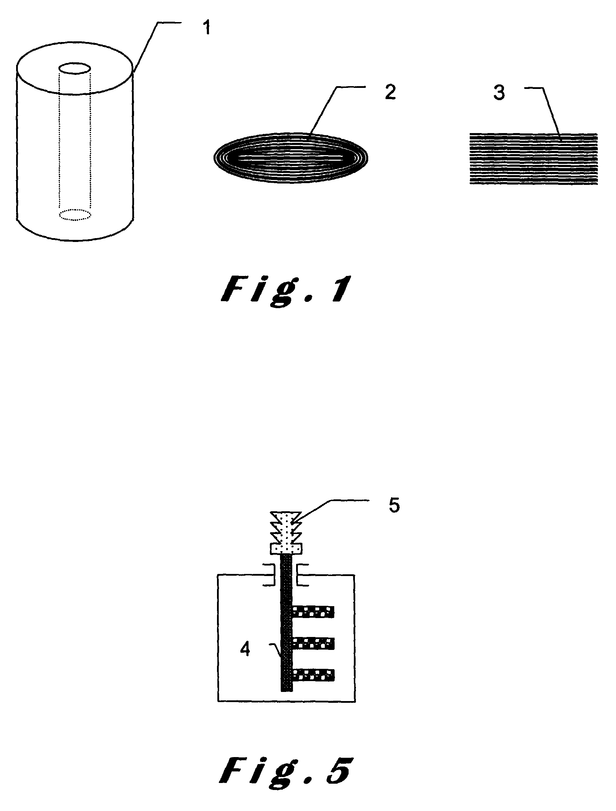

As illustrated in figure 1, the power capacitor is either cylindrically (1) shaped, oval shaped (2) or box-shaped (3) and formed by a series of windings. The heat pipe can be attached in different manners to the windings as will be described hereinafter, in order to achieve an efficient draining of the heat generated in the capacitor.

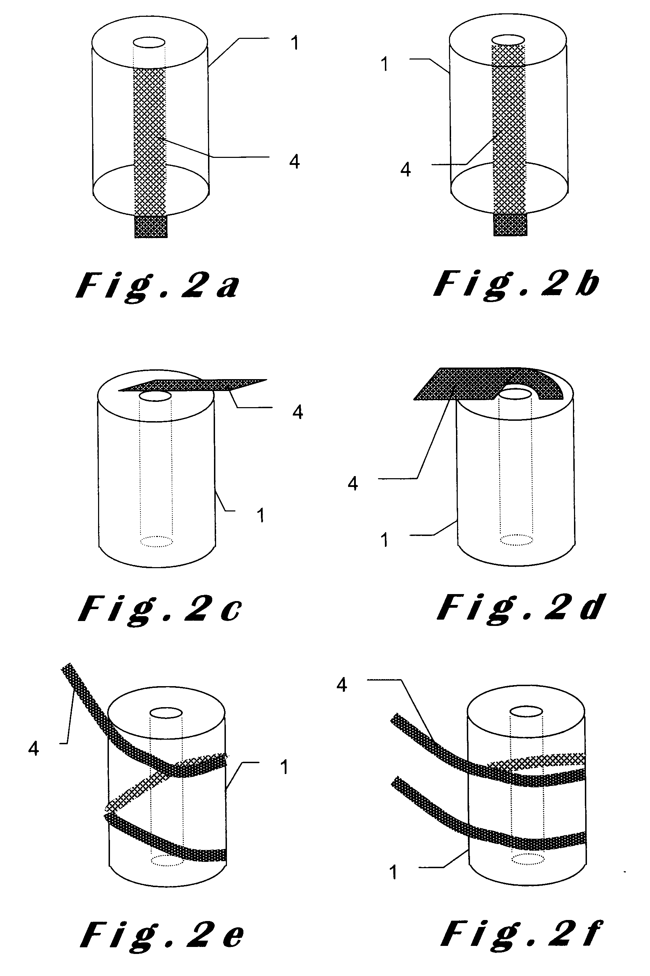

Figure 2A-F show a number of alternative embodiments of the present invention applied to a cylindrical capacitor element.

In Fig. 2A, heat is drained due to the thermal connection from the otherwise relatively poorly cooled centre of the capacitor element (1) using a heat pipe (4) that may preferably be cylindrical to achieve good contact with the core on which the winding, forming the capacitor element, is typically applied. The heat pipe is therefor applied in the centre of the windings.

A further improvement of the heat transfer and a potential cost benefit is achieved by actually combining the heat pipe and the core in one single device. This may be achieved either with a typical heat pipe design as one single-wall tube or as a double-wall design as illustrated in Fig. 2B. The windings of the capacitor are than wound around the heat pipe.

Another way of extracting the heat is to attach the heat pipe to one of the end-faces of the element as illustrated in Fig. 2C (small contact area) or 2D (big contact area) or to both end-faces in a similar fashion (not shown). This embodiment has, at least two advantages that may fruitfully be exploited to a larger or lesser degree, depending on other design aspects of the capacitor and also its particular application. It is feasible to combine or integrate the heat pipe with the conductor that supplies the current to the capacitor, thereby saving in the total number of parts and cooling this conductor. The advantage of cooling of the conductor is, of course, most useful in high-current applications. The embodiments as per Fig. 2C and 2D do also enable a soldering contact of the heat pipes to the electrode system of the capacitor. The heat is thereby drained more efficiently.

In Fig. 2E and 2F are finally shown two examples of simpler applications of heat pipes that do have the merit of being easier to apply and that may also remain electrically insulating for easier mounting and use of the same heat pipe for several elements.

It is, of course, possible to combine several of the embodiments described here before depending upon which aspects need to be optimised. It is generally also possible to choose between flat, cylindrical or other shapes of the heat pipes. The figures show some typical examples of such choices.

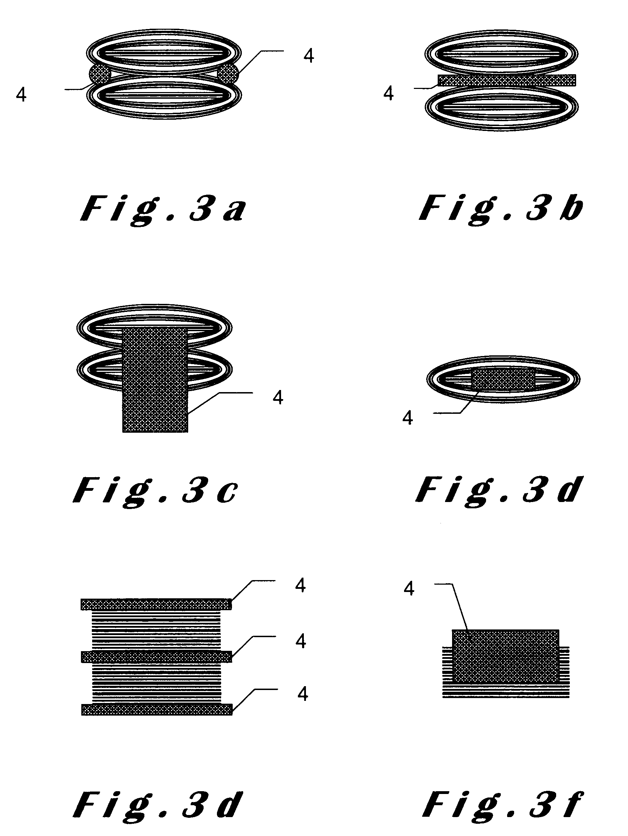

Some geometry's for flat and stacked capacitor elements are shown in Fig. 3A to 3F. Most of what was described for the cylindrical elements may be repeated here with variations prompted by the different geometry. The flat type heat pipe (4) has for these geometry's the similar role and advantages found for the cylindrical type discussed above.

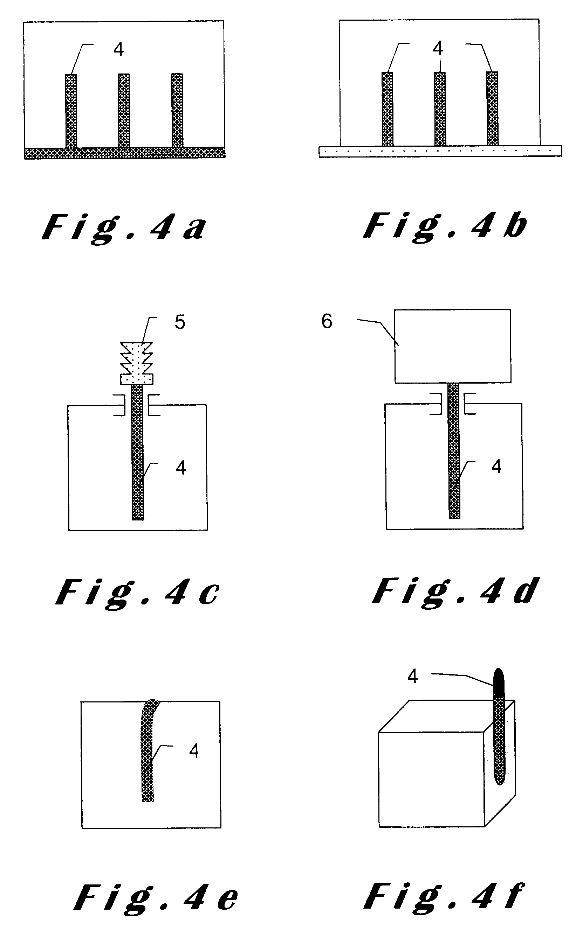

The role of the heat pipe is to transfer heat either to equalise internal temperatures in the capacitor self, or more commonly, to the external environment. Fig. 4A illustrates how this is done in a situation where several heat pipes (4) internal to a capacitor enclosure are connected to one part of the enclosure which in itself is a heat pipe and would transfer the heat to the exterior where it may be dissipated through heat conduction, radiation, convection or other passive or active means. A less costly and easier approach is to use a conventional heat-sink (of e.g. Al) as part of the enclosure instead of the heat pipe (Fig. 4B). The system would function in a similar although less effective manner.

The heat pipe may also pass through the enclosure and be connected to an external radiator (5) (figure 4C) or generalised cooling means (6) (figure 4D) such as water-cooling, fans, or other. A particular example illustrated in figure 4C, is when a heat pipe is simultaneously used as an electrical current carrying conductor and the radiator role is taken by the power cabling or busbars to which the heat pipe/conductor is connected.

The enclosure may itself be used as the cooler if the heat pipe is attached to it as in figure 4E.

In the simplest embodiment, no internal heat pipe is present and only an external heat pipe transfers heat from the enclosure to some other heat-sink, radiator or other as per figure 4F.

In yet another alternative, a cost effective solution may be realised as per figure 5. Here, the internal thermal equalisation is performed by conventional heat-sinks made of e.g. Al and the evacuation of the heat to the external environment is ascertained by a heat pipe.

In the various embodiments described above, there is always the issue of electrical insulation. The enclosure of a capacitor may be a conductor or insulator. Conducting enclosures may be connected to one of the two capacitor terminals or may be insulated from them. The heat pipe, being generally conducting, must be connected in a compatible way so that all insulation requirements remain. This engineering task may in some combinations of solutions require extra electrical insulation that will also slightly lessen the efficiency of the heat pipe.

In applications of power capacitors, it is sometimes possible to take one more step than what has been described so far. By not limiting the improvements in heat transfer and/or temperature equalisation to the capacitor, but also add the other components common in many power capacitor applications such as reactors, contactors, solid-state switches (e.g. thyristors or IGBT's), discharge devices, fuses, etc. it is possible to take another major step in total system performance and/or reduced costs.

The integration of a heat pipe and a power capacitor and in particular when the electrical conductor is connected to the heat pipe, offers an appropriate integration of the current supply and heat removal. A surprising effect is obtained in that the thermal benefits are large enough to make the total integration cost effective even for low-loss power capacitors. The direct cooling of the conductor itself increases the advantage of removing heat generated by the electrical resistance of the conductor and enables to reduce the dimension of the conductor, thus saving material and consequently costs.

Instead of having to insulate the winding against heat radiation, the use of a heat pipe enables to remove the heat and thus to obtain a better thermal management of the power capacitor. The combination of an integrated system, where heat and thermal conductivity are realised by a same entity) offers the advantage to better control the heat production.

A yet more striking advantage is present through the extraction of the heat from the hot-spots of the interior of a power capacitor by the effectively negligible thermal resistance of the heat pipe. It becomes in such a manner possible to monitor the internal temperature by measuring the temperature on the heat pipe external to the capacitor. This permits not only to improve on design test evaluation of a capacitor design, but also to easily control the temperature in any practical application at any moment in time. Safer overall operation without excessive design margins becomes feasible resulting in better reliability and lower cost.

Since the performance (e.g. lifetime) of a power capacitor is much determined by the hot-spot temperature, the heat pipes are arranged not only to remove the heat but also to achieve an equalising of the temperatures inside the capacitor. A double effect is thereby achieved. In special cases, the equalising effect may be employed by itself for the most simple execution.

The physical connection of the heat-pipe to the capacitor can be realised in several ways:
a first possibility is when a connection with both thermal and electrical connection is desired. Then the non-insulated connection of the heat pipe to the capacitor element or winding is preferably performed through soldering or alternative methods of spot-welding, laser welding, crimping or other similar technique.
a second possibility is when thermal connection, but electrical insulation is desired. Then the insulated connection of the heat pipe to the capacitor element or winding is performed as an integrated insulated (through paper, plastic, varnish or other) assembly of heat pipe and winding core. For flat winding types, flat executions of heat pipes are similarly just inserted.
a third possibility is when both thermal and electrical insulation is desired. Then the insulation of the heat pipe may (when required) be performed by insulating heat-shrink or other tubing, coating or (preferred) by combining already existing insulation material such as potting compounds (polyurethane, epoxy, ...) for this dual purpose.

## Claims

1. A power capacitor having at least one winding, characterised in that said capacitor comprises at least one heat pipe forming a thermal bridge between said winding(s) and the environment.

2. A power capacitor as claimed in claim 1, characterised in that said heat pipe is an integral part of an electrical conductor, connected to said winding.

3. A power capacitor as claimed in claim 2, characterised in that said conductor is connected to an external busbar provided for supplying current to said conductor, said busbar forming a radiator for dispatching heat originating from said heat pipe.

4. A power capacitor as claimed in any one of the claims 1 to 3, wherein said winding(s) are enclosed in an enclosure, characterised in that said enclosure is provided with cooling means.
